# EUROPEAN PATENT SPECIFICATION

(11) **EP 0 849 939 B1**
(45) Date of publication and mention of the grant of the patent: **01.03.2006**
(21) Application number: 97122361.5
(22) Date of filing: 18.12.1997
(51) Int. Cl.: H04N 9/78, H04N 5/14

(54) **Motion detection circuit and memory control circuit in YC separating circuit of PAL signals**
Bewegungsdetektionsschaltung und Speichersteuerungsschaltung in Y/C-Trennschaltung für PAL-Signale
Circuit de détection de mouvement et circuit de commande de mémoire dans un circuit de séparation Y/C pour signaux en PAL

(30) Priority: 19.12.1996 JP 33945896
(43) Date of publication of application: 24.06.1998
(73) Proprietor: MATSUSHITA ELECTRIC INDUSTRIAL CO., LTD., Kadoma-shi, Osaka 571-0050 (JP)
(72) Inventor: Fujii, Kunihiko, Osaka-shi, Osaka-fu, 536 (JP)
(74) Representative: Kügele, Bernhard

(56) References cited:
- EP-A- 0 242 935
- PATENT ABSTRACTS OF JAPAN vol. 18, no. 320 (E-1563), 17 June 1994 & JP 06 070339 A (HITACHI DENSHI LTD)
- PATENT ABSTRACTS OF JAPAN vol. 16, no. 475 (E-1273), 2 October 1992 & JP 04 170890 A (HITACHI LTD), 18 June 1992
- PATENT ABSTRACTS OF JAPAN vol. 18, no. 515 (E-1611), 28 September 1994 & JP 06 178315 A (SONY CORP), 24 June 1994

## Description

### FIELD OF THE INVENTION

The present invention relates to a circuit for performing motion detection according to a carrier color signal that is separated from a composite signal comprising multiplexed luminance signal and carrier color signal, and a circuit for controlling three-dimensional memories included in the motion detection circuit, in a three-dimensional YC separating circuit employed in a television (TV) and a video tape recorder (VTR) corresponding to a PAL (Phase Alternation Line Color Television) system.

### BACKGROUND OF THE INVENTION

In recent years, as TVs are made larger-sized and wider, TVs and VTRs appealing high image quality have been marketed in succession. Most of them utilize a digital signal processing technique using memories, which is represented by a YC separating circuit.

This YC separating circuit is one for separating a luminance signal (Y signal) and a carrier color signal (C signal) which are superimposed in a composite color television signal in a PAL system.

For example, reference may be mode to JP-A-4 170 890 (relative to which the invention is characterized), JP-A-6 070 339, JP-A-6 178 315 and EP-A-0 242 935.

For example, the aforementioned Japanese Patent Publication No. JP-A-4-170890 discloses a YC separating circuit that operates at a sampling frequency which is four times as high as the color sub carrier frequency, that is, about 4.43 MHz, and which is also synchronized with the phase of color burst.

In technique disclosed in this publication, in order to perform YC separation with good performance, two-dimensional processing in which operations between pixels of a video signal in perpendicular directions are performed, and three-dimensional processing in which processing between pixels arranged in a time direction is performed are switched with high precision. In this technique, the difference between two frames is utilized for motion detection in three-dimensional separation.

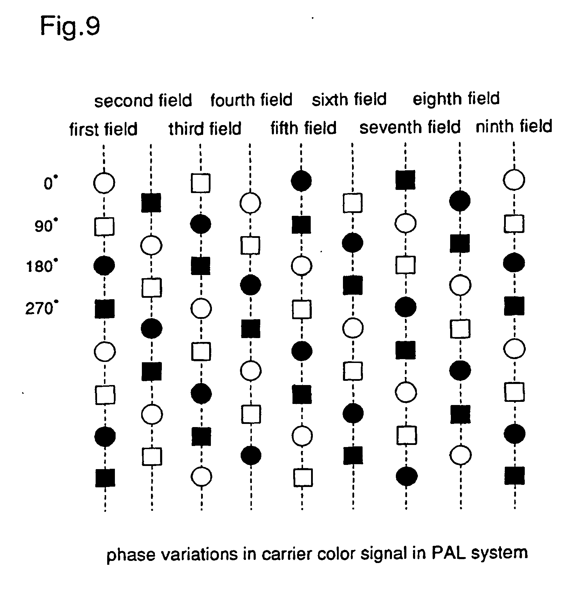

In the PAL system, the frequency of the color sub carrier is {(1135/4) + (1/625)}·fH (fH: horizontal synchronizing frequency). Therefore, as shown in figure 9, the phase is inverted at a period of two lines in each field and the phase is inverted at a period of two frames between fields. For this reason, a memory with a capacity corresponding to two frames is used in realizing three-dimensional YC separation in the technique of the above-mentioned publication.

However, a time distance for the difference between two frames is long, so that precision in motion detection of a fast motion is low, failing to improve image quality sufficiently.

Meanwhile, when motion detection is performed using a memory with only a capacity corresponding to one field, system cost can be drastically reduced as compared with when a memory with a capacity corresponding to two frames is used. As a means for further reducing the memory capacity, a method of writing a video signal, except a synchronizing signal portion, mainly a vertical synchronizing signal, into a memory is considered. That is, a memory mask signal may be output for a vertical synchronizing signal period, thereby inhibiting read/write to the memory.

However, since the memory reset timing occurs at a period of 312 lines while the line number of a video signal is 625, the memory reset timing does not synchronize with the video signal. As a result, the memory reset timing is shifted by one line every other field.

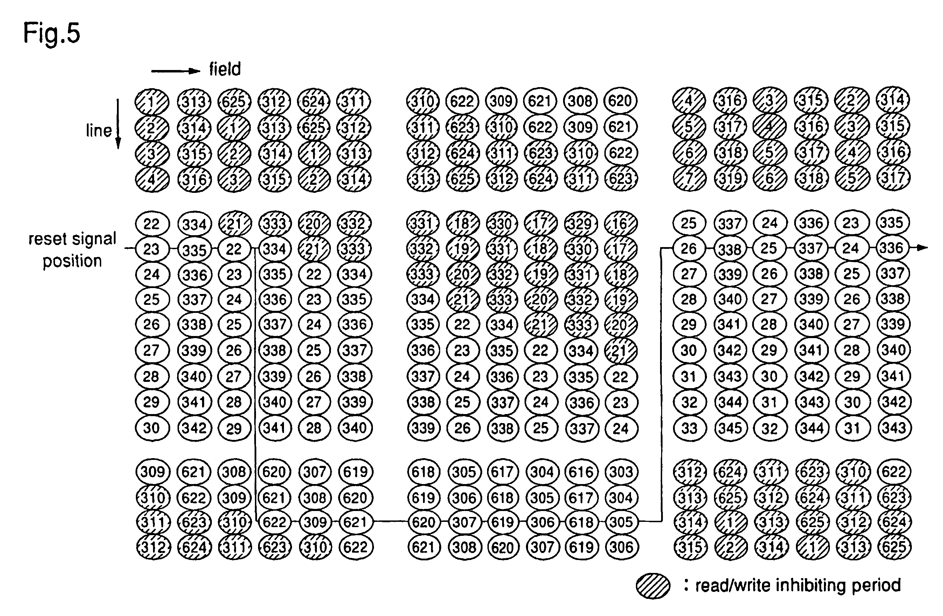

Specifically, assuming that video signals are arranged by 312 lines as shown in figure 5, when a memory reset occurs at the 23rd line of the first field, a memory reset occurs at the 22nd line of the third field.

The phase of the carrier color signal is shifted by 180° in the horizontal direction when the video signals are arranged by 312 lines as shown in figure 5. Accordingly, it is required that the lines for which writing and reading are to be performed after memory resets occur should coincide in the horizontal direction, such as the 23rd line → the 335th line → the 22nd line.

When the reset timing is outside the period of inhibiting read/write to the memory, a delay of 312 lines always occurs. However, when the memory reset occurs in the period of inhibiting read/write to the memory, a delay of 313 lines is produced every other field.

For example, when a reset occurs at the 334th line of the fourth field as shown in figure 5, this line is written into memory from address "0" of the memory and the 21st line at which a next memory reset occurs is in the period of inhibiting read/write to the memory. Therefore, actually the data of the 334th line is read out from the address "0" at the 22nd line, thereby periodically causing malfunctions in the motion detection circuit.

### SUMMARY OF THE INVENTION

It would be desirable to provide a motion detection circuit for a YC separating circuit of PAL signals, in which a difference value between two lines in a field is calculated to separate the carrier color signal from the composite signal, and motion of the carrier color signal between fields is detected, whereby a time distance therebetween is shortened to a great extent, and precision in the motion detection is improved.

It would also be desirable to provide a memory control circuit in a YC separating circuit of PAL signals, in which capacities of memories for accomplishing YC separation can be further reduced without malfunctions in the motion detection circuit.

According to the present invention which is defined in claim 1, a motion detection circuit for a YC separating circuit of PAL signals includes an input terminal for inputting a composite signal; a first memory for delaying the composite signal by 2 lines to produce a 2-line delay output; a second memory for delaying the composite signal by 312 lines to produce a 312-line delay output; a third memory for delaying the 312-line delay output of the second memory by 2 lines to produce a 314-line delay output; a first subtracter for performing subtraction on the basis of the 312-line delay output of the second memory and the 314-line delay output of the third memory to produce a first subtraction signal; a second subtracter for performing subtraction on the basis of the composite signal and the 2-line delay output of the first memory to produce a second subtraction signal; a first band pass filter for band restricting the output of the first subtracter to produce a first band restricted signal; a second band pass filter for band restricting the output of the second subtracter to produce a second band restricted signal; an adder for performing addition on the basis of the output of the first band pass filter and the output of the second band pass filter to produce an added signal; and a comparator circuit for comparing the absolute value of the output of the adder with a previously set threshold value, to output a motion detection signal. In this circuit, the respective differences between two lines in a field and between two lines that are 312 lines away from the first two lines are taken, a carrier color signal is separated from a composite signal, the motion amount of color between the fields is calculated, and from the comparison of the motion amount with a threshold value, a motion detection signal detected from the carrier color signal is obtained. Therefore, as compared with the prior art two frame motion detection, motion detection can be accomplished by a time distance of one-fourth, resulting in improved precision in separation.

In a preferred embodiment of the present invention, the motion detection circuit according to the first aspect of the invention further comprises a memory control circuit for controlling the first to third memories of the motion detection circuit; assuming that the sampling number for one line of a PAL signal is N (N: positive integer), the line number for one field is 312, and the line number for one frame is 625; the memory control circuit comprising a first line counter that starts counting samples in one line after being reset by a first reset signal; a line count decoder that outputs the first reset signal when the first line counter counts up N; a first frame counter that counts up the line number each time when the first reset signal is input from the line count decoder, after being reset by a second reset signal; a frame count decoder that outputs said second reset signal when the first frame counter counts up 625; a field counter that starts counting after being reset by a memory reset signal for resetting the first to third memories; a field count decoder that outputs a third reset signal when the field counter counts up N x 312; a field start decoder that outputs a fourth reset signal when the count value of the first frame counter reaches a specified count value and when the field counter counts up N x (312-M) (M: positive integer); a logical OR gate that receives both of the third reset signal and fourth reset signal and outputs the memory reset signal; and a mask signal generating circuit that decodes outputs of the first frame counter and outputs a memory mask signal inhibiting read/write to the first to third memories in the vertical synchronizing signal period when the first frame counter outputs a specified value.

In this circuit, a count value of a vertical synchronizing signal portion is decoded on the basis of the first line counter and the first frame counter operating synchronized with lines and frames of video signals, respectively, whereby a memory mask signal inhibiting read/write to the memories is obtained, as well as the timing for resetting the memories is shifted toward a video signal period when the reset takes in the vertical synchronizing signal period, whereby a memory reset signal realizing a continuous delay of a 312 line period. Consequently, only a video signal portion, except a vertical synchronizing signal portion, of one field is written into the memories with high efficiency, whereby capacities of the memories for accomplishing YC separation can be reduced without malfunctions in the motion detection circuit.

In another preferred embodiment of the present invention, the memory control circuit further comprises a field distinguishing circuit that distinguishes odd and even fields on the basis of phases of horizontal and vertical synchronizing signals and provides a corresponding output signal; a second line counter that, after being reset when a change point in output of the horizontal synchronizing signal is detected every clock of the horizontal synchronizing signal ; a second frame counter that detects a start position of a frame on the basis of the vertical synchronizing signal and an output of the field distinguishing circuit and performs counting of every horizontal synchronizing signal; a synchronous state detection circuit that compares the output values of the first frame counter with a change point in the memory mask signal thereby detecting a state synchronized with the memory mask signal; wherein the first line counter receives an output reset signal from the synchronous state detection circuit.

In this circuit, distinguishing between odd and even fields is performed from a horizontal synchronizing signal and a vertical synchronizing signal, and the second line counter and the second frame counter operating synchronized with the horizontal synchronizing signal and the vertical synchronizing signal, respectively, operate to detect the state synchronized with the memory mask signal. When the state synchronized with the memory mask signal is shifted, the second line counter and the second frame counter are corrected, whereby even at such as turning on of a power supply, a memory mask signal synchronized with a frame of a video signal can always be obtained. Consequently, even when the video signal and the memory mask signal are not synchronized as at turning on of a power supply, the video signal and the memory mask signal can be stably made lead-in into the synchronized state. This results in reduction in capacities of the memories for accomplishing YC separation without malfunctions in the motion detection circuit as well as improved stability in the circuit operation.

### BRIEF DESCRIPTION OF THE DRAWINGS

Figure 1 is a block diagram illustrating a motion detection circuit in a YC separating circuit of PAL signals in accordance with a first embodiment of the present invention.
Figure 2 is a diagram for explaining phase variations in respective fields in accordance with motions in a carrier color signal.
Figure 3 is a block diagram illustrating a memory control circuit in a YC separating circuit of PAL signals according to the first embodiment of the invention.
Figure 4 is a waveform diagram illustrating timings of the horizontal synchronizing signal and the memory mask signal.
Figure 5 is a diagram for explaining relations between memory reset signals, memory mask signals, lines, and fields.
Figure 6 is a block diagram illustrating a memory control circuit in a YC separating circuit of PAL signals in accordance with a second embodiment of the present invention.

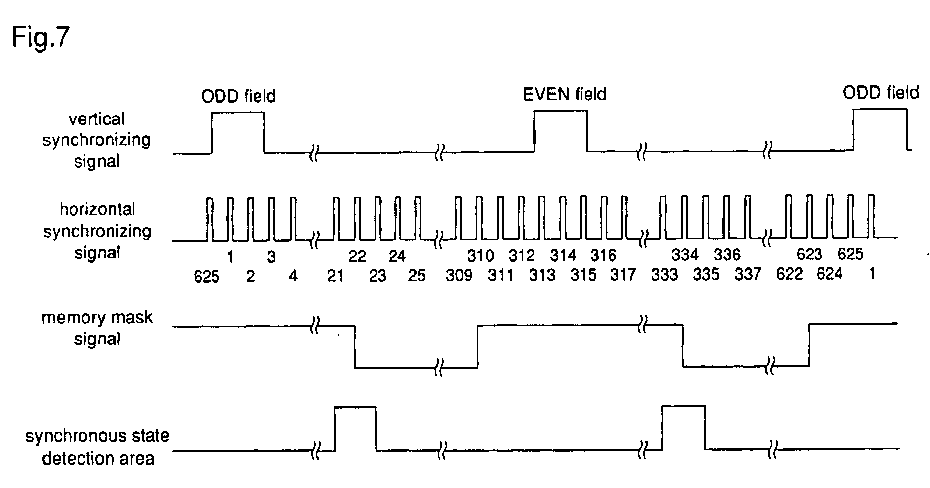

Figure 7 is a waveform diagram illustrating timings of the horizontal synchronizing signal, the vertical synchronizing signal, and the various control signals.
Figure 8 is a timing chart for explaining operations of the frame counters and the line counters.
Figure 9 is a diagram for explaining phase variations in respective fields in a carrier color signal of a PAL system.

### DETAILED DESCRIPTION OF THE PREFERRED EMBODIMENTS

Respective embodiments of the present invention will be described in detail.

### Embodiment 1.

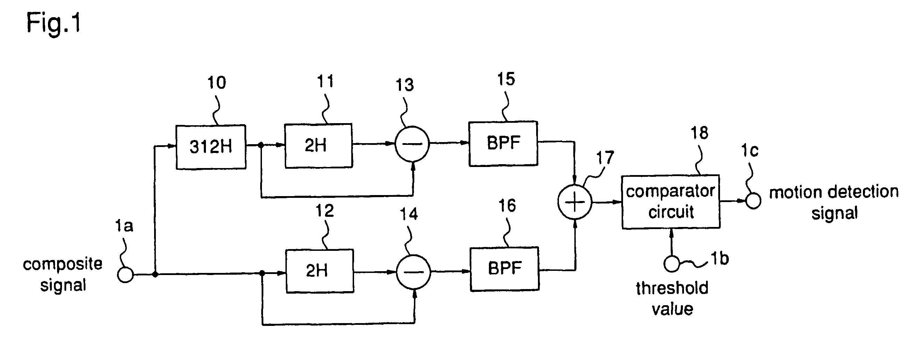

Figure 1 is a block diagram illustrating a motion detection circuit in a YC separating circuit of PAL signals according to a first embodiment of the present invention.

As shown in figure 1, the motion detection circuit according to the first embodiment of the invention includes a field memory (second memory) 10, a line memory (third memory) 11, and a line memory (first memory) 12 for storing a composite signal that is input through a terminal 1a, a subtracter 13 for performing subtraction on the basis of an output of the field memory 10 and an output of the line memory 11, a subtracter 14 for performing subtraction on the basis of the composite signal and an output of the line memory 12, a band pass filter (hereinafter referred to as a BPF) 15 for band restricting an output of the subtracter 13, a band pass filter (hereinafter referred to as a BPF) 16 for band restricting an output of the subtracter 14, an adder 17 for performing addition on the basis of an output of the BPF 15 and an output of the BPF 16, and a comparator circuit 18 for comparing the absolute value of an output of the adder 17 with a previously set threshold value, to output a motion detection signal through a terminal lc on the basis of the comparison result.

The field memory 10 is of an FIFO (First In First Out) structure with delay stages corresponding to 312 lines.

The line memories 11 and 12 are each of an FIFO structure with delay stages corresponding to 2 lines.

The BPF 15 and the BPF 16 are for extracting a carrier color signal component having a center frequency of about 4.43 MHz.

A description is given of the motion detection operation of the motion detection circuit.

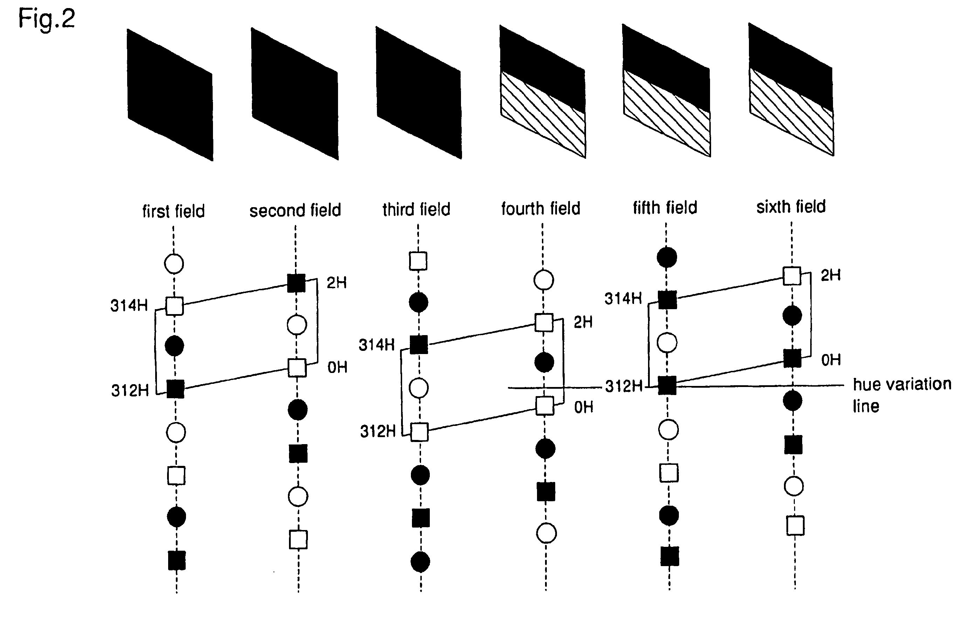

As mentioned above, the phase of a color signal of the PAL system is inverted at a period of two lines or two frames. In order to facilitate the explanation of the operation of the motion detection, a case is considered where a hue varies by 180° with a field as a boundary as shown in figure 2.

In figure 2, 0H, 2H, 312H and 314H on the lines surrounding as a square represent a signal of terminal la, an output of line memory 12, an output of field memory 10, and an output of line memory 11, respectively.

For simplification, assuming that the value of the carrier color signal represented by □ is A, the value of the carrier color signal represented by ■ is an inverted value of the value of the carrier color signal represented by □, i.e., -A.

Initially, in the operation between the first and second fields, the output value of the subtracter 13 is "-2A" and the output value of the subtracter 14 is "2A". Assuming that the luminance signal comprises only a dc component, the output value of the BPF 15 is "-2A" and the output value of the BPF 16 is "2A". Thereby, the output value of the adder 17 becomes "0".

Next, in the operation between the third and fourth fields, the output value of the subtracter 13 is "2A" and the output value of the subtracter 14 is "0". Assuming that the luminance signal comprises only a dc component, the output value of the BPF 15 is "2A" and the output value of the BPF 16 is "0". Thereby, the output value of the adder 17 becomes "2A".

In the subsequent operation between the fifth and sixth fields, the output value of the subtracter 13 is "-2A" and the output value of the subtracter 14 is "0". Assuming that the luminance signal comprises only a dc component, the output value of the BPF 15 is "-2A" and the output value of the BPF 16 is "0". Thereby, the output value of the adder 17 becomes "-2A".

Here, a threshold value is set at the terminal 1b. This threshold value serves as a parameter for judging which a video signal is, a moving picture or a still picture.

Assuming that a fixed value, for example, B which satisfies a relationship of 0 < B < 2A, is set as the threshold value, the comparator circuit 18 considers the video signal between the first and second fields a still picture, and outputs, for example, "1", as a motion detection signal to the terminal lc. Meanwhile, the comparator circuit 18 considers the video signals between the third and fourth fields and between the fifth and sixth fields moving pictures, and outputs, for example, "0", as motion detection signals to the terminal 1c.

In other words, the motion detection circuit takes respective differences between two lines in a field and between two lines that are 312 lines away from the first two lines and operates these two difference values. Therefore, in either case of a still picture and a moving picture, i.e., in either case of variations in hue between fields and in a field, variations in color signal can be detected precisely.

Consequently, in the motion detection circuit according to the first embodiment of the invention, the difference between two lines in each field is calculated, the carrier color signal is separated from the composite signal, and motions of the carrier color signal between the fields are detected, whereby a time distance therebetween can be shortened to a great extent as compared with the prior art, resulting in improved precision in motion detection.

Incidentally, while when the conventional motion detection between two frames is performed in the example shown in figure 2, lower halves of four fields from the fourth to the seventh fields are detected as motions, the motion detection circuit of the first embodiment makes only the fourth field detected as a motion, thereby resulting in a time distance of one-fourth as compared with that the prior art. This means that the two-dimensional processing of low precision is employed in a period of only one-fourth with relative to the prior art.

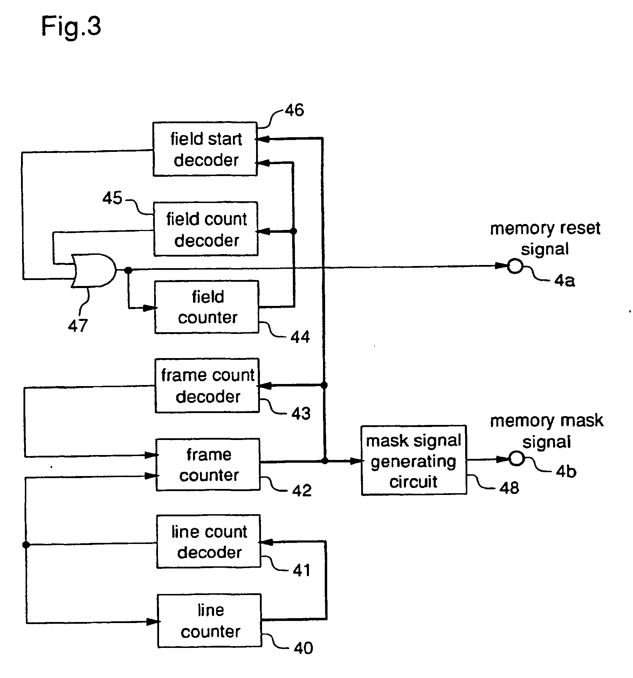

Figure 3 is a block diagram illustrating a memory control circuit in a YC separating circuit of PAL signals according to the first embodiment of the present invention.

As shown in figure 3, the memory control circuit according to the first embodiment of the invention is provided for controlling the field memory 10 shown in figure 1. This memory control circuit includes a first line counter (N-ary counter) 40, a line count decoder 41, a first frame counter (625-ary counter) 42, a frame count decoder 43, a field counter 44, a field count decoder 45, a field start decoder 46, an OR gate 47, and a mask signal generating circuit 48. Assuming that the sampling number for one line of a PAL signal is N (N: positive integer), the line number for one field is 312, and the line number for one frame is 625, the first line counter 40 starts counting after being reset by a first reset signal. The line count decoder 41 outputs a first reset signal when the line counter 40 counts up N. The first frame counter 42 counts the line number when the first reset signal is input from the line count decoder 41, after being reset by a second reset signal. The frame count decoder 43 outputs the second reset signal when the first frame counter 42 counts up 625. The field counter 44 starts counting after being reset by a memory reset signal for resetting the field memory 10. The field count decoder 45 outputs a third reset signal when the field counter 44 counts up N x 312. The field start decoder 46 outputs a fourth reset signal when the count value of the frame counter 42 reaches a specified value and when the field counter 44 counts up N x (312-M) (M: positive integer). The OR gate 47 receives both of the third and fourth reset signals and outputs the memory reset signal through a terminal 4a. The mask signal generating circuit 48 decodes outputs of the frame counter 42 having a specified value to output a memory mask signal inhibiting read/write to the field memory 10 in the vertical synchronizing signal period through a terminal 4b.

A description is given of the operation of the above-described memory control circuit.

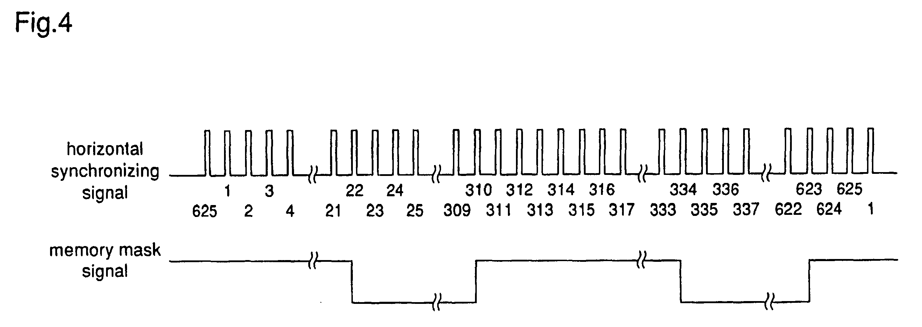

The vertical synchronizing signal period of 24 lines is included in 312 lines of a video signal, and this period requires no three-dimensional processing. Therefore, in the above-described memory control circuit, as shown in figure 4, memory mask signals are output during the vertical synchronizing signal period from the 310th to 333rd lines and that from the 623rd to 21st lines, in order to inhibit read/write to the field memory 10.

More specifically, the first line counter 40 counts up every clock and outputs the resulting count signal to the line count decoder 41. Thereafter, when the count value of the line counter 40 reaches N (N is the sampling number in one line), the line count decoder 41 outputs a first reset signal to the first line counter 40 and the frame counter 42. The first line counter 40 is reset by the first reset signal decoded by the line count decoder 41. After being reset, the first line counter 40 starts counting up again.

The first frame counter 42 counts up the line number each time the first reset signal is input, and outputs the resulting count signal to the frame count decoder 43, the field start decoder 46, and the mask signal generating circuit 48. Then, when the count value of the first frame counter 42 reaches 625, the first frame counter 42 is reset by a second reset signal decoded by the frame count decoder 43. After being reset, the first frame counter 42 starts counting up again.

The mask signal generating circuit 48 decodes lines in the vertical synchronizing signal period on the basis of the outputs of the first frame counter 42. When the 310th line in the vertical synchronizing signal period is decoded, a memory mask signal is output to the terminal 4b as shown in figure 4, in the mask signal generating circuit 48. Then, the memory mask signal becomes high level. When the 333rd line in the vertical synchronizing signal period is decoded, the memory mask signal becomes low level. Then, when the 623rd line in the vertical synchronizing signal period is decoded, the memory mask signal is output to the terminal 4b as shown in figure 4, by the mask signal generating circuit 48. Then, the memory mask signal becomes high level. When the 21st line in the vertical synchronizing signal period is decoded, the memory mask signal becomes low level.

In this way, when the lines of the number as described above are decoded in the mask signal generating circuit 48, the memory mask signal is output to the terminal 4b.

Meanwhile, the memory reset signal is decoded by the field count decoder 45 and is output each time the field counter 44 counts up N x 312, when the position of the reset signal is outside the vertical synchronizing signal period.

However, since the memory reset signal has a period of 312 lines while one field of a video signal alternatively repeats either of 312 lines and 313 lines, the memory reset signal and the memory mask signal are in an asynchronous relation, whereby the reset signal position comes periodically within the vertical synchronizing signal period.

Specifically, when resets take from the positions shown in figure 5, reset signals are output at the 23rd line, 335th line, 22nd line, and 334th line, respectively. As long as the field memory 10 is reset at these positions, the field memory 10 produces a delay of 312 lines each time. This enables normal signal processing to be always performed. However, when a reset occurs at the 21st line in the vertical synchronizing signal period, read/write of the field memory 10 starts from the 22nd line. This makes the field memory 10 produce a delay of 313 lines, which does not enable normal signal processing.

In order to avoid such a problem, the memory control circuit is configured that a reset taking at the 334th line which is the beginning of a video signal is detected in a field and a reset signal is again output at the 622nd line which is the final line of that field.

This operation is performed because a delay of 312 lines is equivalently produced by mandatorily outputting a memory reset signal at the 288th line (= 312-24).

More specifically, the field counter 44 starts counting after being reset by the memory reset signal. These count signals are output to the field count decoder 45 and the field start decoder 46.

When the count value of the field counter 44 reaches N x 312, the field count decoder 45 outputs a third reset signal to the OR gate 47. Then, the field start decoder 46 detects the third reset signal being output from the field count decoder 45 to the OR gate 47, reads the frame line number, and compares the frame line number and a previously set specified line number, thereby judging whether these line numbers coincide with each other. This judgment result is temporarily stored in the field start decoder 46.

The timing at which it is judged whether the frame line number read by the field start decoder 46 and the previously set specified line number coincide with each other is, for example, when the line count value of the first frame counter 42 reaches 334. When the read frame line number and the previously set specified line number coincide with each other and when the count value of the first frame counter 42 reaches 622, the field start decoder 46 mandatorily outputs a fourth reset signal to the OR gate 47.

Then, the OR gate 47 receives both inputs of the third reset signal from the field count decoder 45 and the fourth reset signal from the field start decoder 46, takes a logical OR of those, and outputs a memory reset signal to the terminal 4a.

By taking the logical OR of the output of the field count decoder 45 and the output of the field start decoder 46 by the OR gate 47, the memory reset signal output to the terminal 4a is output only in the video signal period, whereby the delay amount of the field memory 10 always becomes 312 lines.

More particularly, in the above-described memory control circuit, a count value of a vertical synchronizing signal portion is decoded on the basis of the line counter 40 and the frame counter 42 operating synchronized with lines and frames of video signals, respectively, whereby a memory mask signal inhibiting read/write to the field memory 10 is obtained, as well as the timing for resetting the field memory 10 is shifted toward the video signal period when the reset timing enters the vertical synchronizing signal period, whereby a memory reset signal realizing a continuous delay of 312 lines is obtained.

Consequently, in the memory control circuit according to the first embodiment of the invention, only a video signal portion, except a vertical synchronizing signal portion, of one field is written into the field memory 10 with high efficiency, whereby the capacity of the field memory 10 for accomplishing YC separation can be reduced without malfunctions in the motion detection circuit.

The memory control circuit of the first embodiment is configured such that a field memory is controlled by a free-run counter that operates synchronized with a horizontal synchronizing signal and a vertical synchronizing signal of a video signal without any restrictions on means for synchronization with the horizontal synchronizing signal and the vertical synchronizing signal. Meanwhile, a memory control circuit according to a second embodiment of the present invention described below is provided with means for synchronization with a horizontal synchronizing signal and a vertical synchronizing signal, in addition to the memory control circuit of the first embodiment.

### Embodiment 2.

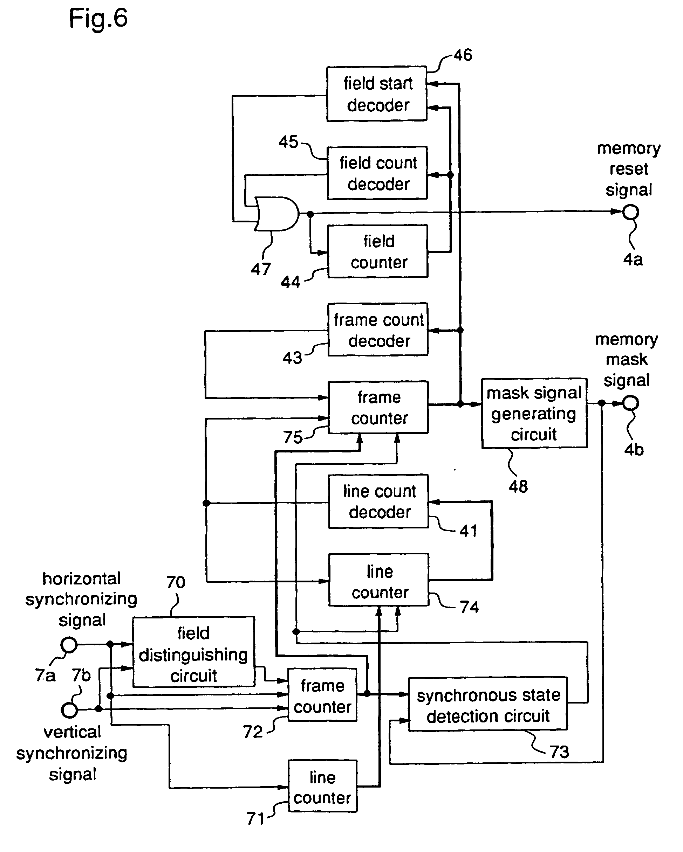

Figure 6 is a block diagram illustrating a memory control circuit in a YC separating circuit of PAL signals according to a second embodiment of the present invention.

As shown in figure 6, the memory control circuit according to the second embodiment of the invention is provided for controlling the field memory 10 shown in figure 1. This memory control circuit includes a field distinguishing circuit 70, a second line counter 71, a second frame counter 72, a synchronous state detection circuit 73, and includes further elements already described in relation to the first embodiment ; a first line counter 74, a line count decoder 41, a first frame counter 75, a frame count decoder 43, a field counter 44, a field count decoder 45, a field start decoder 46, an OR gate 47, and a mask signal generating circuit 48. Assuming that the sampling number for one line of a PAL signal is N (N: positive integer), the line number for one field is 312, and the line number for one frame is 625, the field distinguishing circuit 70 distinguishes odd field or even field for the present field depending on phases of a horizontal synchronizing signal input through a terminal 7a and a vertical synchronizing signal input through a terminal 7b. The second line counter 71 starts counting after being reset when a change point in output of the horizontal synchronizing signal is detected. The second frame counter 72 detects a start position of a frame on the basis of the vertical synchronizing signal and an output of the field distinguishing circuit 70, and performs counting when the horizontal synchronizing signal is input. The synchronous state detection circuit 73 compares an output value of the second frame counter 72 with a change point in a memory mask signal and detects the state synchronized with the memory mask signal on the basis of the comparison result. The first line counter 74 starts counting after being reset by a first reset signal, and makes the count value of the second line counter 71 loaded thereon when an output of the synchronous state detection circuit 73 is input. The line count decoder 41 outputs a first reset signal when the first line counter 74 counts up N. The first frame counter 75 counts the line number when the first reset signal is input after being reset by a second reset signal, and makes the count value of the second frame counter 72 loaded thereon when an output of the synchronous state detection circuit 73 is input. The frame count decoder 43 outputs a second reset signal when the first frame counter 75 counts up 625. The field counter 44 starts counting after being reset by a memory reset signal. The field count decoder 45 outputs a third reset signal when the field counter 44 counts up N x 312. The field start decoder 46 outputs a fourth reset signal when the count value of the first frame counter 75 reaches a specified value and when the field counter 44 counts up N x (312-M) (M: positive integer). The OR gate 47 receives both of the third reset signal and fourth reset signal and outputs a memory reset signal through a terminal 4a. The mask signal generating circuit 48 decodes outputs of the first frame counter 75 with a specified value and outputs a memory mask signal through a terminal 4b.

A description is given of the operation of the memory control circuit.

The line count decoder 41, the frame count decoder 43, the field counter 44, the field count decoder 45, the field start decoder 46, and the mask signal generating circuit 48 perform the same circuit operations as described for the first embodiment, and no description is given thereof.

The field distinguishing circuit 70 distinguishes ODD field or EVEN field for the present field depending on a position relation between a horizontal synchronizing signal input from the terminal 7a and a vertical synchronizing signal input from the terminal 7b, and outputs this distinguishing signal to the second frame counter 72.

The second line counter 71 counts up every clock of the horizontal synchronizing signal after being reset by the horizontal synchronizing signal, and outputs the resulting count signal to the second line counter 74.

The second frame counter 72 counts up every horizontal synchronizing signal after being reset by the vertical synchronizing signal in the ODD field, and outputs the resulting count signal to the synchronous state detection circuit 73 and the second frame counter 75.

The synchronous state detection circuit 73 produces a synchronous state detection area from the outputs of the second frame counter 72, and detects whether the leading of a memory mask signal falls in this area or not.

When the synchronous state detection area is in the state synchronized with the memory mask signal, the YC separating circuit performs normal operation.

However, when this area is not in the state synchronized with the memory mask signal, a video signal portion is to be masked. Therefore, corrections to the first line counter 74 and the first frame counter 75 are required.

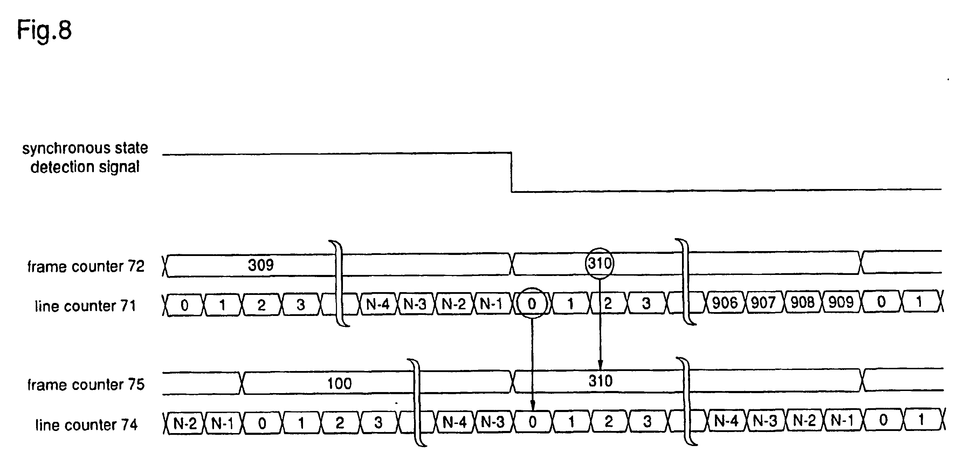

Figure 8 is a timing chart showing a method for correcting these counters.

Referring to figure 8, assuming that an output of the synchronous state detection circuit 73 in the non-synchronized state with a memory mask signal is, for example, "1", and it is detected in an ODD field, the count value at the timing when the second frame counter 72 has counted 310th line at which writing into the memory as a video signal starts is loaded onto the first frame counter 75 and the count value of the second line counter 71 is also loaded onto the first line counter 74.

When this output is detected in an EVEN field, the same correcting operation is conducted at the 623rd line.

Besides, after entering the state synchronized with the memory mask signal, the first line counter 74 and the first frame counter 75 carry out free-run operation again until the state synchronized with the memory mask signal is removed.

In the memory control circuit, distinguishing between odd field and even field is performed from a horizontal synchronizing signal and a vertical synchronizing signal, and the second line counter and the second frame counter operating synchronized with the horizontal synchronizing signal and the vertical synchronizing signal, respectively, operate, to detect the state synchronized with a memory mask signal. When the state synchronized with the memory mask signal is removed, corrections are conducted to the first line counter and the first frame counter, whereby even at turning on of a power supply, a memory mask signal that is synchronized with a frame of a video signal can always be produced.

Consequently, in the memory control circuit according to the second embodiment of the invention, even when a video signal and a memory mask signal are not in a synchronous relation at such as turning on of a power supply, the video signal and the memory mask signal are always lead-in into the synchronized state, whereby a capacity of the field memory 10 for accomplishing YC separation can be reduced without malfunctions in the motion detection circuit as well as stability of the circuit operation can be improved.

The present invention is not limited to the respective embodiments, but various design changes and modifications with the scope claims may be carried out.

## Claims

1. A motion detection circuit for a YC separating circuit of PAL signals, the motion detection circuit including:
an input terminal (1a) for inputting a composite signal;
**characterized by**:
a first memory (12) for delaying the composite signal by 2 lines to produce a 2-line delay output;
a second memory (10) for delaying the composite signal by 312 lines to produce a 312-line delay output;
a third memory (11) for delaying the 312-line delay output of the second memory by 2 lines to produce a 314-line delay output;
a first subtracter (13) for performing subtraction on the basis of the 312-line delay output of the second memory and the 314-line delay output of the third memory to produce a first subtraction signal;
a second subtracter (14) for performing subtraction on the basis of the composite signal and the 2-line delay output of the first memory to produce a second subtraction signal;
a first band pass filter (15) for band restricting the output of the first subtracter to produce a first band restricted signal;
a second band pass filter (16) for band restricting the output of the second subtracter to produce a second band restricted signal;
an adder (17) for performing addition on the basis of the output of the first band pass filter and the output of the second band pass filter to produce an added signal; and
a comparator circuit (18) for comparing the absolute value of the output of the adder with a previously set threshold value (1b), to output a motion detection signal.

2. A circuit according to claim 1, further comprising a membry control circuit for controlling said first to third memories; assuming that the sampling number for one line of a PAL signal is N, N being a positive integer, the line number for one field is 312, and the line number for one frame is 625; said memory control circuit comprising
a first line counter (40; 74) that starts counting samples in one line after being reset by a first reset signal;
a line count decoder (41) that outputs said first reset signal when the first line counter counts up N;
a first frame counter (42; 75) that counts up the line number each time when the first reset signal is received of from the line count decoder, after being reset by a second reset signal;
a frame count decoder (43) that outputs said second reset signal when the first frame counter counts up 625;
a field counter (44) that starts counting after being reset by a memory reset signal for resetting the first to third memories;
a field count decoder (45) that outputs a third reset signal when the field counter counts up N x 312;
a field start decoder (46) that outputs a fourth reset signal when the count value of the first frame counter reaches a specified count value and when the field counter counts up N x (312-M), M being a positive integer;
a logical OR gate (47) that receives both of the third reset signal and fourth reset signal and outputs said memory reset signal; and
a mask signal generating circuit (48) that decodes outputs of the first frame counter (42; 75) and outputs a memory mask signal inhibiting read/write to the first to third memories in the vertical synchronizing signal period when said first frame counter outputs a specified value.

3. A circuit according to claim 2, wherein the memory control circuit further comprises:
a field distinguishing circuit (70) that distinguishes odd and even fields on the basis of phases of horizontal and vertical synchronizing signals and provides a corresponding output signal;
a second line counter (71) that, after being reset when a change point in output of the horizontal synchronizing signal is detected, starts counting every clock of the horizontal synchronizing signal;
a second frame counter (72) that detects a start position of a frame on the basis of the vertical synchronizing signal and an output of the field distinguishing circuit and performs counting every horizontal synchronizing signal;
a synchronous state detection circuit (73) that compares the output values of the second frame counter (72) with a change point in said memory mask signal thereby detecting a state synchronized with the memory mask signal;
wherein said first line counter (74) receives an output reset signal from said synchronous state detection circuit.

## Patentansprüche

1. Bewegungsdetektionsschaltung für eine Y/C-Trennschaltung von PAL-Signalen, wobei die Bewegungsdetektionsschaltung einschliesst:
einen Eingangsanschluss (1a) zur Eingabe eines zusammengesetzten Signals;
**gekennzeichnet durch**:
einen ersten Speicher (12) zur Verzögerung des zusammengesetzten Signals um zwei Zeilen, um ein um zwei Zeilen verzögertes Ausgangssignal zu erzeugen;
einen zweiten Speicher (10) zur Verzögerung des zusammengesetzten Signals um 312 Zeilen, um ein um 312 Zeilen verzögertes Ausgangssignal zu erzeugen;
einen dritten Speicher (11) zur Verzögerung des um 312 Zeilen verzögerten Ausgangssignals des zweiten Speichers um zwei Zeilen, um ein um 314 Zeilen verzögertes Ausgangssignal zu erzeugen;
einen ersten Subtrahierer (13) zur Durchführung einer Subtraktion auf der Grundlage des um 312 Zeilen verzögerten Ausgangssignals des zweiten Speichers und des um 314 Zeilen verzögerten Ausgangssignals des dritten Speichers, um ein erstes Subtraktionssignal zu erzeugen;
einen zweiten Subtrahierer (14) zur Durchführung einer Subtraktion auf der Grundlage des zusammengesetzten Signals und des um zwei Zeilen verzögerten Ausgangssignals des ersten Speichers, um ein zweites Subtraktionssignal zu erzeugen;
ein erstes Bandpassfilter (15) zur Bandbegrenzung des Ausgangssignals des ersten Subtrahierers, um ein erstes bandbegrenztes Signal zu erzeugen;
ein zweites Bandpassfilter (16) zur Bandbegrenzung des Ausgangssignals des zweiten Subtrahierers, um ein zweites bandbegrenztes Signal zu erzeugen;
einen Addierer (17) zur Durchführung einer Addition auf der Grundlage des Ausgangssignals des ersten Bandpassfilters und des Ausgangssignals des zweiten Bandpassfilters, um ein addiertes Signal zu erzeugen; und
eine Komparatorschaltung (18) zum Vergleich des Absolutwertes des Ausgangssignals des Addierers mit einem im Voraus festgesetzten Schwellenwert (1b), um ein Bewegungsdetektionssignal auszugeben.

2. Schaltung nach Anspruch 1, weiter eine Speichersteuerschaltung zur Steuerung des ersten bis dritten Speichers umfassend; annehmend, dass die Abtastzahl für eine Zeile eines PAL-Signals *N* ist, wobei *N* eine positive ganze Zahl ist; die Zeilenzahl für ein Feld 312 und die Zeilenzahl für einen Frame 625 ist; die Speichersteuerschaltung umfassend:
einen ersten Zeilenzähler (40; 74), der nach Rückstellung durch ein erstes Rückstellsignal beginnt, Muster in einer Zeile zu zählen;
einen Zeilenzahldekodierer (41), der das erste Rückstellsignal ausgibt, wenn der erste Zeilenzähler *N* gezählt hat;
einen ersten Framezähler (42, 75), der nach Rückstellung durch ein zweites Rückstellsignal immer dann die Zeilenzahl zählt, wenn das erste Rückstellsignal vom Zeilenzahldekodierer empfangen wird;
einen Framezahldekodierer (43), der das zweite Rückstellsignal ausgibt, wenn der erste Framezähler 625 gezählt hat;
einen Feldzähler (44), der nach Rückstellung durch ein Speicherrückstellsignal zur Rückstellung des ersten bis dritten Speichers zu zählen beginnt;
einen Feldzahldekodierer (45), der ein drittes Rückstellsignal ausgibt, wenn der Feldzähler *N* x 312 gezählt hat;
einen Feldanfangsdekodierer (46), der ein viertes Rückstellsignal ausgibt, wenn der Zählwert des ersten Framezählers einen festgelegten Zählwert erreicht und der Feldzähler *N* x (312 *- M)* gezählt hat, wobei *M* eine positive ganze Zahl ist;
ein logisches ODER-Gatter (47), das sowohl das dritte Rückstellsignal als auch das vierte Rückstellsignal empfängt und das Speicherrückstellsignal ausgibt; und
eine Maskensignalerzeugungsschaltung (48), die die Ausgangssignale des ersten Framezählers (42; 75) dekodiert und ein Speichermaskensignal ausgibt, das ein Lesen und Schreiben des ersten bis dritten Speichers in der vertikalen Synchronisiersignalperiode sperrt, wenn der erste Framezähler einen festgelegten Wert ausgibt.

3. Schaltung nach Anspruch 2, **dadurch gekennzeichnet, dass** die Speichersteuerschaltung weiter umfasst:
eine Feldunterscheidungsschaltung (70), die auf der Basis von Phasen des horizontalen und vertikalen Synchronisiersignals ungerade und gerade Felder unterscheidet und ein entsprechendes Ausgangssignal liefert;
einen zweiten Zeilenzähler (71), der nach Rückstellung jeden Takt des horizontalen Synchronisiersignals zu zählen beginnt, wenn ein Wechselpunkt im Ausgangssignal des horizontalen Synchronisiersignals erkannt worden ist;
einen zweiten Framezähler (72), der auf der Grundlage des vertikalen Synchronisiersignals und eines Ausgangssignals der Feldunterscheidungsschaltung die Anfangsposition eines Frames erkennt und eine Zählung jedes horizontalen Synchronisiersignals durchführt;
eine Synchronzustands-Detektionsschaltung (73), die die Ausgangswerte des zweiten Framezählers (72) mit einem Wechselpunkt im Speichermaskensignal vergleicht und **dadurch** einen mit dem Speichermaskensignal synchronisierten Zustand erkennt;
wobei der erste Zeilenzähler (74) ein Ausgangsrückstellsignal von der Synchronzustands-Detektionsschaltung empfängt.

## Revendications

1. Circuit de détection de mouvement destiné à un circuit de séparation YC de signaux de type PAL, le circuit de détection de mouvement comprenant :
une borne d'entrée (1a) destinée à appliquer en entrée un signal composite,
**caractérisé par** :
une première mémoire (12) destinée à retarder le signal composite de 2 lignes pour produire une sortie à retard de 2 lignes,
une seconde mémoire (10) destinée à retarder le signal composite de 312 lignes pour produire une sortie à retard de 312 lignes,
une troisième mémoire (11) destinée à retarder la sortie à retard de 312 lignes de la seconde mémoire de 2 lignes pour produire une sortie à retard de 314 lignes,
un premier soustracteur (13) destiné à exécuter une soustraction sur la base de la sortie à retard de 312 lignes de la seconde mémoire et de la sortie à retard de 314 lignes de la troisième mémoire pour produire un premier signal de soustraction,
un second soustracteur (14) destiné à exécuter la soustraction sur la base du signal composite et de la sortie à retard de 2 lignes de la première mémoire pour produire un second signal de soustraction,
un premier filtre passe-bande (15) destiné à restreindre la bande de la sortie du premier soustracteur pour produire un premier signal à bande restreinte,
un second filtre passe-bande (16) destiné à restreindre la bande de la sortie du second soustracteur pour produire un second signal à bande restreinte,
un additionneur (17) destiné à exécuter une addition sur la base de la sortie du premier filtre passe-bande et de la sortie du second filtre passe-bande pour produire un signal additionné, et
un circuit de comparateur (18) destiné à comparer la valeur absolue de la sortie de l'additionneur à une valeur de seuil établie à l'avance (1b), pour fournir en sortie un signal de détection de mouvement.

2. Circuit selon la revendication 1, comprenant en outre un circuit de commande de mémoire destiné à commander lesdites première à troisième mémoires, en supposant que le nombre d'échantillonnages pour une ligne d'un signal de type PAL soit N, N étant un nombre entier positif, que le nombre de lignes pour un balayage de trame soit de 312, et que le nombre de lignes pour une trame complète soit de 625, ledit circuit de commande de mémoire comprenant
un premier compteur de lignes (40 ; 74) qui commence à compter les échantillonnages dans une ligne après avoir été réinitialisé par un premier signal de réinitialisation,
un décodeur de comptage de ligne (41) qui fournit en sortie ledit premier signal réinitialisé lorsque le premier compteur de lignes compte jusqu'à N,
un premier compteur de trame complète (42 ; 75) qui compte le nombre de lignes à chaque fois que le premier signal de réinitialisation est reçu du décodeur de comptage de ligne, après avoir été réinitialisé par un second signal de réinitialisation,
un décodeur de comptage de trame complète (43) qui fournit en sortie ledit second signal de réinitialisation lorsque le premier compteur de trame complète compte jusqu'à 625,
un compteur de balayage de trame (44) qui commence à compter après avoir été réinitialisé par un signal de réinitialisation de mémoire destiné à réinitialiser les première à troisième mémoires,
un décodeur de comptage de balayage de trame (45) qui fournit en sortie un troisième signal de réinitialisation lorsque le compteur de balayage de trame compte jusqu'à N x 312,
un décodeur de début de balayage de trame (46) qui fournit en sortie un quatrième signal de réinitialisation lorsque la valeur de comptage du premier compteur de trame complète atteint une valeur de comptage spécifiée et lorsque le compteur de balayage de trame compte jusqu'à N x (312 - M), M étant un nombre entier positif,
une porte OU logique (47) qui reçoit à la fois le troisième signal de réinitialisation et le quatrième signal de réinitialisation et fournit en sortie ledit signal de réinitialisation de mémoire, et
un circuit de génération de signal de masque (48) qui décode des sorties du premier compteur de trame complète (42 ; 75) et fournit en sortie un signal de masque de mémoire inhibant la lecture/écriture vers les première à troisième mémoires dans la période du signal de synchronisation verticale lorsque ledit premier compteur de trame complète fournit en sortie une valeur spécifiée.

3. Circuit selon la revendication 2, dans lequel le circuit de commande de mémoire comprend en outre :
un circuit de distinction de balayage de trame (70) qui distingue les balayages de trame impair et pair sur la base des phases des signaux de synchronisation horizontale et verticale et procure un signal de sortie correspondant,
un second compteur de lignes (71) qui, après avoir été réinitialisé lorsqu'un point de changement de la sortie du signal de synchronisation horizontale est détecté commence à compter chaque impulsion d'horloge du signal de synchronisation horizontale,
un second compteur de trame complète (72) qui détecte une position de début d'une trame sur la base du signal de synchronisation verticale et d'une sortie du circuit de distinction de balayage de trame et exécute un comptage pour chaque signal de synchronisation horizontale,
un circuit de détection d'état synchrone (73) qui compare les valeurs de sortie du second compteur de trame complète (72) à un point de changement dudit signal de masque de mémoire en détectant ainsi un état synchronisé avec le signal de masque de mémoire,
dans lequel ledit premier compteur de lignes (74) reçoit un signal de réinitialisation de sortie dudit circuit de détection d'état synchrone.
